# EUROPEAN PATENT SPECIFICATION

(11) **EP 0 684 901 B1**
(45) Date of publication and mention of the grant of the patent: **07.07.1999**
(21) Application number: 92908046.3
(22) Date of filing: 30.03.1992
(51) Int. Cl.: B29C 55/22, B65D 1/02

(54) **A CONTAINER OF ORIENTABLE PLASTIC MATERIAL AND A METHOD OF PRODUCING THE CONTAINER**
BEHÄLTER AUS ORIENTIERBAREM KUNSTSTOFF UND VERFAHREN ZU DESSEN HERSTELLUNG
RECIPIENT EN MATIERE PLASTIQUE ORIENTABLE ET PROCEDE DE PRODUCTION DU RECIPIENT

(30) Priority: 11.04.1991 SE 9101104
(43) Date of publication of application: 06.12.1995
(73) Proprietor: PLM AB, 201 80 Malmö (SE)
(72) Inventor: PEDERSEN, Jan, Rune, DK-5260 Odense (DK)
(74) Representative: Rostovanyi, Peter
(86) International application number: SE9200196
(87) International publication number: WO9218318

(56) References cited:
- US-A- 4 564 495
- US-A- 4 569 866
- US-A- 4 580 968

## Description

The present invention relates to a container and a method of producing a container according to the preambles to the independent claims, based on US-A-4 580 968.

In many contexts, there is a need for a thin-walled container of plastic material, in which the container, at least in its thin-walled portion, consists of oriented material. The desire that the thin-walled material be oriented is conditioned by the fact that the material will thereby generally possess superior mechanical strength properties than the non-oriented material. Naturally, the property of being thin-walled affords the obvious advantage that the material quantity in the container is reduced, and thereby the material costs of the container. It is normally a wish in this art that the mouth portion of the container consists of thicker material, in particular in practical versions in which the container is intended to be emptied of its contents in portions. As a result of the thicker material, the mechanical properties of the mouth portion will be improved (the mouth portion becomes more stable), and handling of the container is generally facilitated in connection with its opening and/or its resealing. One example of a container in which the above-outlined desiderata exist is a tube for mustard, fish paste, caviar etc. A container designed as a tube and employed for the above-mentioned objects must also be easy to compress in order to facilitate the forcible discharge of the contents of the container.

Injection moulding of a container of the type disclosed in the preceding paragraph is extremely difficult, since the material fed to the mould cavity is forced to pass through a narrow gap-like aperture in order to be displaced to the parts of the mould located most distally from the injection nozzle. This places extreme demands on temperature control of the molten, injected plastic material, as well as on the properties of the plastic material itself. As a result, containers produced in accordance with the technique described in this paragraph will be of undesirably large wall thickness.

The characterizing clauses of the independent claims disclose a container and a method for producing a container in which the above-outlined drawbacks have been obviated and the above-mentioned desiderata satisfied.

Employment of the present invention will eliminate the problems inherent in displacing molten plastic material through narrow passages, at the same time as the present invention makes it possible to obtain extremely thin wall portions in the container body. Moreover, the sought-for oriented material in the container body will be obtained, whereby the combination of great mechanical strength and resilience will be achieved.

Further expedient embodiments of the present invention are disclosed in the appended subclaims.

The present invention will be described in greater detail hereinbelow with particular reference to the accompanying Drawings. In the accompanying Drawings:
- Fig. 1: is a cross-section through a blank from which a container is produced;
- Fig. 2: is a cross-section through a schematically illustrated apparatus for reforming the blank into the container;
- Fig. 3: is a cross-section corresponding to the cross-section of Fig. 2 in which the reforming of the blank into the container has been commenced; and
- Fig. 4: is a cross-section corresponding to the cross-section of Fig. 2, in which the container has been formed.

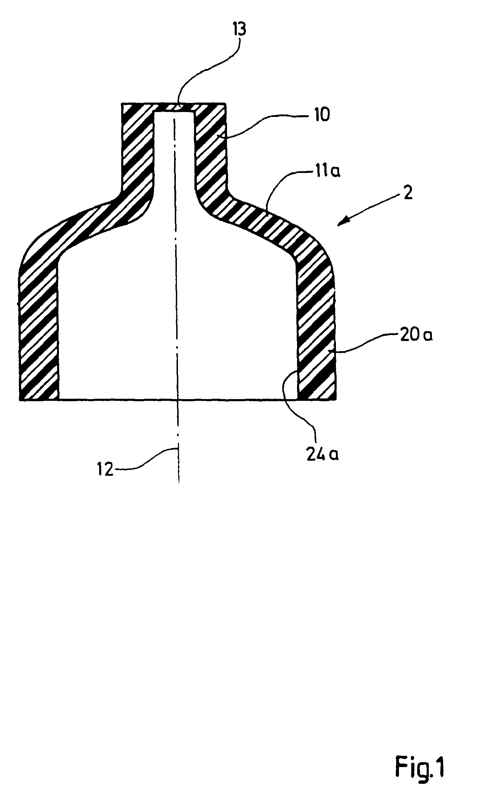

Fig. 1 shows a blank 2 of non-oriented (amorphous) plastic material. The blank comprises a mouth portion 10, a tube-like portion 20a and a material region 11a in which the mouth portion merges into the tube-like portion. The mouth portion is sealed by means of a material disk 13 formed in connection with the injection molding of the blank and constituting a material portion integral with the adjacent plastic material. As a rule, the material disk 13 corresponds to that material region in which the plastic material is fed to the injection mould in connection with production of the blank. As a result, the material disk is of more irregular configuration than that which is apparent from the Figures. Reference numeral 12 indicates a centre axis of the blank. The tube-like portion 20a has an orientation which substantially corresponds to the axial direction of the centre axis. The cross-section of the tube-like portion is, for example, circular, but the inventive concept as herein disclosed also permits employment of a blank whose cross-section may have any optional configuration, for example polygonal, oval etc.

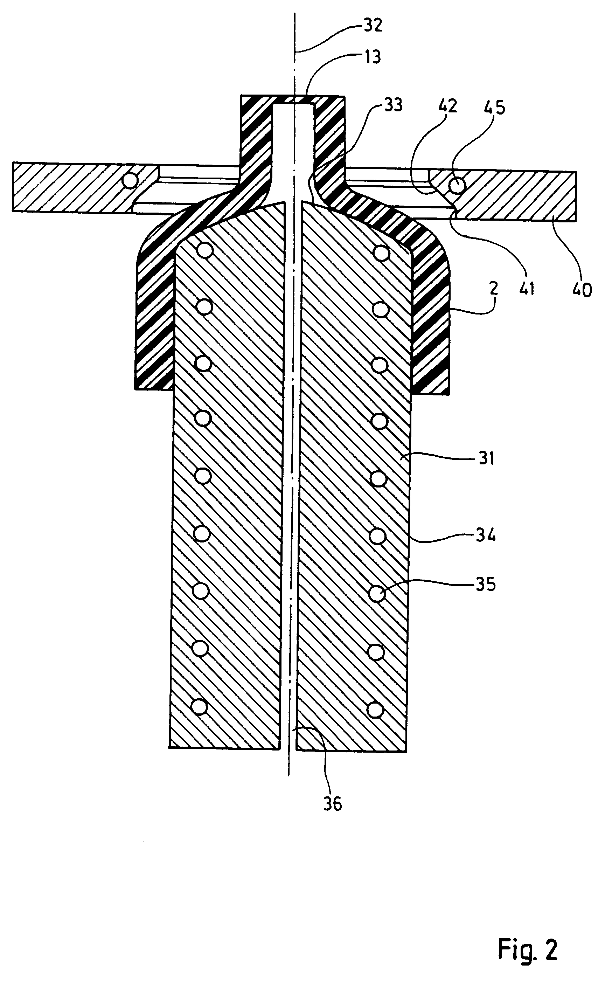

Fig. 2 shows the blank 2 placed on a mandrel 31. The mandrel has an abutment surface 33 which is upwardly facing in the Figure, and art outer defining surface 34 disposed parallel with its centre axis 32. The cross-section of the mandrel and the dimensions of the mandrel are adapted to the cross-section of the blank and the dimensions of the blank so that the outer defining surface 34 abuts against or is located close to the inner defining surface 24a of the blank. The mandrel is provided with channels 35 for thermal medium, whereby the temperature of the mandrel may be adjusted. The mandrel is provided with a central channel 36 which discharges in the upwardly facing abutment surface and, as a rule, in its central region. The central channel is connected to means (not shown) for supplying compressed air to the channel.

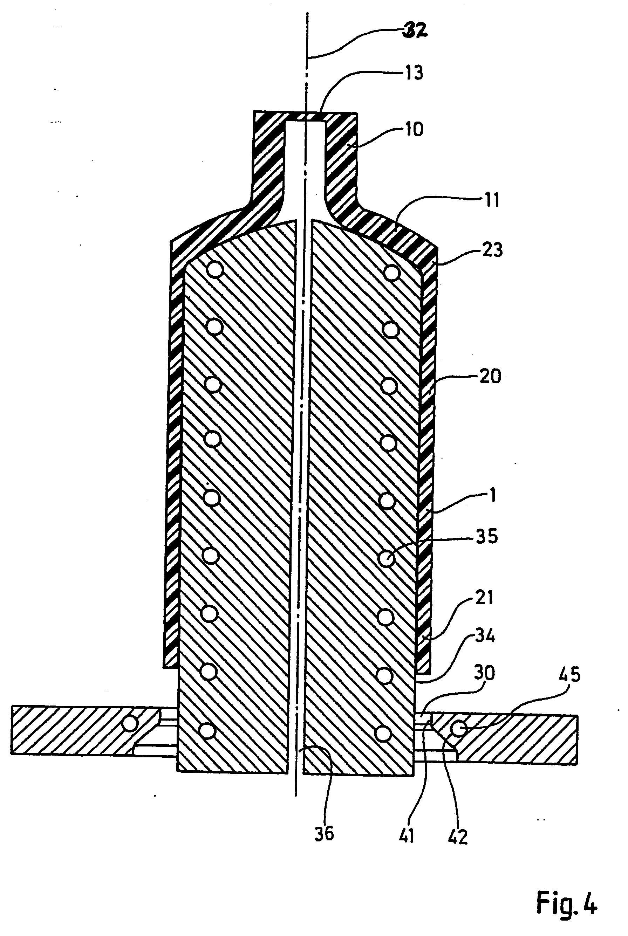

Fig. 2 also shows a mechanical device 40, hereinafter designated drawing ring, which is shown in the Figures in a position above the blank 2. The drawing ring is also provided with channels 45 for thermal medium. The drawing ring and the mandrel are connected to means (not shown in the Drawing) for relative displacement of the drawing ring and the mandrel. In the relative displacement, the drawing ring passes along the mandrel and in such instance forms, between itself and the mandrel, a gap 30 (c.f. Fig. 4). This is dimensioned so as to have a gap width which is less than the material thickness of the blank and which, as a rule, amounts at most to half of the material thickness of the blank in the tube-like portion of the blank. The defining surface 41 of the drawing ring facing the mandrel includes an oblique surface 42, hereinafter also designated working surface.

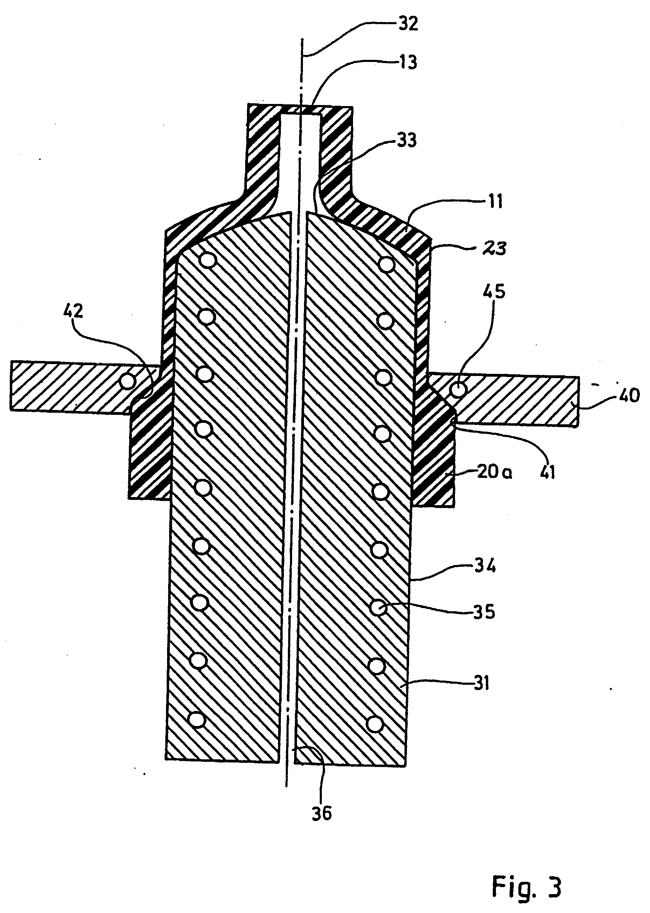

Figures 3 and 4 show the drawing ring in positions along the mandrel 31. In the position illustrated in Fig. 3, the drawing ring has reduced the material thickness of the tube-like portion 20a of the blank along a portion thereof, and in Fig. 3, the drawing ring has reached a position where all material in the tube-like portion has passed through that gap which the drawing ring forms to the mandrel during the relative displacement of the drawing ring along the mandrel.

Fig. 4 shows a container 1 formed from the blank and comprising a mouth portion 10, a container body 20, a connecting portion 11 between the mouth portion and the container body, as well as the bottom portion 21 of the container. The container body consists of material which, on displacement of the drawing ring in relation to the mandrel has passed through the gap 30 between the drawing ring and the mandrel. On passage, the material thickness has been reduced and the material obtained a monoaxial orientation. In certain materials, for example PET, deformation of the material takes place corresponding to that deformation which the material would obtain if the material, under corresponding conditions (temperature and speed of displacement through the gap) had been subjected to monoaxial stretching forces so that material flow occurred. By the orientation, a crystallinity in the material will be achieved of at least 12 %, and often of at least 17 %.

In certain practical applications, production of the container is completed by the material in the wall of the container body being heated, by the mandrel 31, or after the container under formation has been moved to yet another mandrel (not shown on the Drawings but of corresponding design and construction to that shown in Figs. 2-4), to a temperature at which the material thermocrystallizes. In such instance, the material is retained on the mandrel for a predetermined period of time which is adapted to the special effects it is intended to achieve, for example in the form of release of inner tensions embodied in the material on orientation, shrinking of the material in the orientation direction so as to reduce the shrink tendency of the material on heating, increase of crystallinity so as to improve mechanical strength properties, etc. By this heat treatment, the desired increased crystallinity of the material will be satisfied in addition to the crystallinity obtained by the orientation process. It is thereby possible, in certain practical applications, to obtain a crystallinity of at least 17 % and even of at least 25 % even when the crystallinity conditioned by the monoaxial orientation is less than 15 %.

On passage through the gap 30, a distinct transition 23 is formed between non-oriented material and oriented material. Such is also the case in the starting region of the orientation of the material, i.e. in that region where the connection portion 11 merges into the container body 12. The distinct transition 23 has an extent in the direction of orientation of the material which at most amounts to twice the material thickness. Preferably, the extent of the transition 23 at most amounts to 1.5 times the material thickness and, as a rule, at most to the material thickness proper of the non-oriented material which is located immediately adjacent the transition 23. Material which passes through the gap 30 will obtain, in addition to the above-indicated substantially monoaxial orientation, also a corresponding material thickness.

## Claims

1. A container of orientable plastic material, including a mouth portion (10), a container body (20), a bottom portion (21) and a connecting portion (11) located between the mouth portion (10) and the container body (20); the container body (20) and the bottom portion (21) consisting of monoaxially oriented material whose direction of orientation substantially corresponds to the direction of the axis (22) of the container (1); and all monoaxially oriented material having a substantially corresponding orientation, **characterised** in that the mouth portion (10) and the connecting portion (11) consist of non-oriented material and that the container (1) has a distinct transition (23) between non-oriented and oriented material, the transition (23) having an extent in the longitudinal direction of the container (1) which at most amounts to twice, preferably at most to 1.5 times, and generally at most to the material thickness of the non-oriented material immediately adjacent the transition (23).

2. The container as claimed in claim 1, wherein all material in the container body (30) and the bottom portion (21) is oriented.

3. The container as claimed in claim 1 or 2, wherein the oriented material, in addition to the crystallinity conditioned by the orientation, has a thermally conditioned crystallinity.

4. The container as claimed in any one of the preceding claims, wherein PET is used and the crystallinity of the oriented material is at least 15%, preferably at least 20%, and as a rule at least 25%.

5. A method of producing a container (1) of orientable plastic material, in which the container comprises a mouth portion (10), a container body (20), a bottom portion (21), and a connecting portion (11) located between the mouth portion (10) and the container body (20), and in which the mouth portion (10) and the connecting portion (11) consist of non-oriented material; comprising the steps: that a blank (2) of substantially amorphous material is formed with a mouth portion (10) and with a material region (11a) corresponding to the connecting portion (11) of the container (1) under formation; that on formation of the blank (2), both the mouth portion (10) and said material region of the blank (2) are given a mechanical configuration (shape) substantially corresponding to the configuration of corresponding parts of the finished container (1); that the blank (2) is formed with a tube-like portion (20a) connecting to the material region (11a) and being of substantially non-oriented material and with geometric orientation substantially corresponding to the axial direction of the blank (2); and that the material in the tube-like portion (20a) for orientation of the material is, by mechanical means, forced through a mechanical gap (30) with a smallest gap width at most amounting to approx. half of the wall thickness of the material, the material being oriented on passage through the gap, and there obtaining a substantially agreeing monoaxial orientation (crystallinity), **characterised** in that all material in the container body (20) and the bottom portion (21) is oriented and in that the material, after passage through the gap (30), is heated to and kept at a temperature at which the material crystallizes thermally and/or shrinks in the orientation direction of the material.

## Patentansprüche

1. Behälter aus orientierbarem Kunststoffmaterial, der einen Mündungsbereich (10), einen Behälterhauptteil (20), einen Bodenbereich (21) und einen Verbindungsbereich (11) aufweist, der zwischen dem Mündungsbereich (10) und dem Behälterhauptteil (20) angeordnet ist; wobei der Behälterhauptteil (20) und der Bodenbereich (21) aus monoaxial orientiertem Material besteht, dessen Orientierungsrichtung im wesentlichen der Richtung der Achse (22) des Behälters (1) entspricht; und wobei das gesamte monoaxial orientierte Material eine im wesentlichen entsprechende Orientierung aufweist, dadurch gekennzeichnet, daß der Mündungsbereich (10) und der Verbindungsbereich (11) aus nichtorientiertem Material bestehen und daß der Behälter (1) einen ausgeprägten Übergang (23) zwischen nichtorientiertem und orientiertem Material hat, wobei der Übergang (23) eine Ausdehnung in Längsrichtung des Behälters (1) aufweist, die höchstens das 2-fache der Materialdicke, vorzugsweise höchstens das 1,5-fache der Materialdicke und allgemein höchstens die Materialdicke des nichtorientierten Materials unmittelbar neben dem Übergang (23) beträgt.

2. Behälter nach Anspruch 1, bei dem das gesamte Material im Behälterhauptteil (20) und dem Bodenbereich (21) orientiert ist.

3. Behälter nach Anspruch 1 oder 2, bei dem das orientierte Material zusätzlich zu der Kristallinität, die durch die Orientierung bedingt ist, eine thermisch bedingte Kristallinität aufweist.

4. Behälter nach einem der vorstehenden Ansprüche, bei dem PET verwendet ist und die Kristallinität des orientierten Materials wenigstens 15 %, Vorzugsweise wenigstens 20 % und in der Regel wenigstens 25 % beträgt.

5. Verfahren zum Herstellen eines Behälters 1 aus orientierbarem Kunststoffmaterial, wobei der Behälter einen Mündungsbereich (10), einen Behälterhauptteil (20), einen Bodenbereich (21) und einen Verbindungsbereich (11) aufweist, der zwischen dem Mündungsbereich (10) und dem Behälterhauptteil (20) angeordnet ist, und wobei der Mündungsbereich (10) und der Verbindungsbereich (11) aus nichtorientiertem Material bestehen; das die Schritte aufweist: daß ein Rohling (2) aus im wesentlichem amorphem Material mit einem Mündungsbereich (10) und mit einem Materialbereich (11a) gebildet wird, der dem Verbindungsbereich (11) des Behälters (1) entspricht, der geformt wird; daß bei Formung des Rohlings (2) sowohl dem Mündungsbereich (10) als auch dem Materialbereich des Rohlings (2) eine mechanische Gestaltung (Form) gegeben wird, die im wesentlichen der Gestaltung der entsprechenden Teile des fertiggestellten Behälters (1) entspricht; daß der Rohling (2) mit einem röhren- oder schlauchförmigen Bereich (20a) gebildet wird, der mit dem Materialbereich (11a) verbunden ist und aus im wesentlichen nichtorientiertem Material besteht und eine geometrische Orientierung aufweist, die im wesentlichen der Axialrichtung des Rohlings (2) entspricht; und daß das Material im röhren- oder schlauchförmigen Bereich (20a) zur Orientierung des Materials durch mechanische Mittel durch einen mechanischen Spalt (30) mit einer kleinsten Spaltbreite getrieben wird, die höchstens ungefähr die halbe Wanddicke des Materials beträgt, wobei das Material beim Durchgang durch den Spalt orientiert wird, und daß dort eine im wesentlichen übereinstimmende monoaxiale Orientierung (Kristallinität) erhalten wird, dadurch gekennzeichnet, daß das gesamte Material im Behälterhauptteil (20) und im Bodenbereich (21) orientiert wird und daß das Material nach dem Durchgang durch den Spalt (30) auf eine Temperatur erhitzt und auf dieser Temperatur gehalten wird, bei der das Material thermisch kristallisiert und/oder in Orientierungsrichtung des Materials schrumpft.

## Revendications

1. Récipient de matière plastique orientable, comprenant une partie de goulot (10), un corps (20) de récipient, une partie inférieure (21) et une partie de raccordement (11) placée entre la partie du goulot (10) et le corps du récipient (20), le corps du récipient (20) et la partie inférieure (21) étant constitués d'une matière orientée uniaxialement dont la direction d'orientation correspond pratiquement à la direction de l'axe (22) du récipient (1), et toute la matière d'orientation uniaxiale a une orientation pratiquement correspondante, caractérisé en ce que la partie de goulot (10) et la partie de raccordement (11) sont constituées de matière non orientée, et en ce que le récipient (1) a une transition nette (23) entre la matière non orientée et la matière orientée, la transition (23) ayant une étendue, dans la direction longitudinale du récipient (1), qui est au plus égale au double et de préférence au plus égale à 1,5 fois, et de façon générale au plus égale à 1 fois l'épaisseur de la matière non orientée immédiatement adjacente à la transition (23).

2. Récipient selon la revendication 1, dans lequel toute la matière du corps (30) du récipient et de la partie inférieure (21) est orientée.

3. Récipient selon la revendication 1 ou 2, dans lequel la matière orientée, en plus de la cristallinité donnée par l'orientation, possède une cristallinité donnée thermiquement.

4. Récipient selon l'une quelconque des revendications précédentes, dans lequel du téréphtalate de polyéthylène est utilisé et la cristallinité de la matière orientée est d'au moins 15 % et de préférence d'au moins 20 % et en règle générale d'au moins 25 %.

5. Procédé de production d'un récipient (1) de matière plastique orientable, dans lequel le récipient comprend une partie de goulot (10), un corps de récipient (20), une partie inférieure (21) et une partie de raccordement (11) placée entre la partie de goulot (10) et le corps du récipient (20), et dans lequel la partie de goulot (10) et la partie de raccordement (11) sont constituées de matière non orientée, le procédé comprenant les étapes suivantes : une ébauche (2) de matière pratiquement amorphe est formée avec une partie de goulot (10) et une région de matière (11a) qui correspond à la partie de raccordement (11) du récipient (1) en cours de formation, après formation de l'ébauche (2), la partie de goulot (10) et la région de matière de l'ébauche (2) sont toutes deux mises à une configuration mécanique (forme) qui correspond pratiquement à la configuration des parties correspondantes du récipient terminé (1), l'ébauche (2) est mise sous forme d'une partie (20a) analogue à un tube se raccordant à la région de matière (11a), constituée de matière pratiquement non orientée et ayant une orientation géométrique correspondant pratiquement à la direction axiale de l'ébauche (2), et la matière de la partie analogue à un tube (20a) destinée à l'orientation de la matière est chassée, par des moyens mécaniques, dans un espace mécanique (30) de plus petite largeur d'espacement correspondant au plus à la moitié environ de l'épaisseur de la paroi de la matière, la matière étant orientée lors de son passage dans cet espace, avec obtention de cette manière d'une orientation uniaxiale pratiquement correspondante (cristallinité), caractérisé en ce que toute la matière du corps du récipient (20) et de la partie inférieure (21) est orientée, et en ce que la matière, après son passage dans ledit espace (30), est chauffée et maintenue à une température à laquelle la matière cristallise thermiquement et/ou présente un retrait dans la direction d'orientation de la matière.
